Europäisches Patentamt

European Patent Office

Office européen des brevets

(11) Publication number: **0 483 980 A1**

# EUROPEAN PATENT APPLICATION

(21) Application number: **91309080.9**

(22) Date of filing: **03.10.91**

(51) Int. Cl.5: **B65D 88/16**, B29C 47/00

(30) Priority: **31.10.90 US 607251**

(43) Date of publication of application:
**06.05.92 Bulletin 92/19**

(84) Designated Contracting States:
**AT BE CH DE FR GB IT LI NL SE**

(71) Applicant: **BETTER AGRICULTURAL GOALS CORPORATION**
**11510 Data Drive, Dallas**
**Dallas County, Texas 75218(US)**

(72) Inventor: **Derby, Norwin Ced**
**1228 N. Wood Street**
**Sherman, Grayson County, Texas 75090(US)**

(74) Representative: **Howick, Nicholas Keith**
**CARPMAELS & RANSFORD 43 Bloomsbury Square**
**London WC1A 2RA(GB)**

(54) **Variable diameter hollow extruded articles and method of manufacture.**

(57) A variable diameter hollow extruded article (20) comprises an integral, unitary, flexible wall (24) defining a body section and at least one spout section (22) with the diameter of the spout section (22) being substantially smaller than the diameter of the body section (24) and in some instances, the thickness of the wall (30) defining the spout section (22) being substantially greater than that defining the body section (24). In a process for manufacturing variable diameter hollow extruded articles (20), an extruded resin tube is alternately expanded in diameter to form the body portions (24) and reduced in diameter to form the spout portions (22) of the extruded articles (20).

Fig.7

This invention relates generally to variable diameter hollow extruded articles, and more particularly to a variable diameter hollow extruded article comprising an integral, unitary, flexible wall defining a tubular body section and at least one other section having a diameter substantially smaller than the diameter of the body section, and to a process for manufacturing variable diameter hollow extruded articles.

Historically, flexible intermediate bulk containers have been used for receiving, storing, transporting and discharging flowable materials of all types. For added protection of the contents and to reduce the dust level and loss of flowable material from the flexible intermediate bulk containers, liners have often been inserted into the containers prior to filling the containers with flowable materials. Liners currently used in such containers typically comprise either right circular cylinder tubes, hereinafter called tubular liners, or similar tubes with multiple folded gussets extending the entire length thereof, hereinafter called gussetted liners. The liners are typically formed from continuously extruded flat or gussetted tubes sealed at spaced apart lengths to form bottoms of individual liners and perforated for separating the continuous tubes into individual liners.

Both flat and gussetted tubular liners fit well in bulk containers having duffle closures at the top. The use of discharge spouts in container bottoms, however, makes use of the flat or gussetted tubular liners difficult. When used with a discharge spout, the sealed bottom end of a tubular liner is gathered and pulled downwardly through the spout before the spout is tied off and closed. Since the diameter of a normal discharge spout is approximately 10-20", and a tubular liner is approximately 45" in diameter, crowding and bunching of the liner occurs when it is gathered and pulled downwardly through the discharge spout. The excess material of the liner can interfere with the flow of the material as it is discharged from the container.

The evolution of the flexible intermediate bulk container has resulted in a fill spout replacing the duffle closure at the top of the container. Fill spouts are approximately the same diameter as the discharge spouts already being used with the containers. As with the discharge spout, the liner is gathered and pulled through the fill spout. The bunching of the liner material caused by the difference between the diameters of the fill spout and the liner makes it difficult to attach the fill spout over a filling pipe, thus allowing leakage of material and dust during filling. Furthermore, the flexibility of prior art liners necessitates the use of a fabric fill spout to support the liner for positioning over the fill pipe during the filling process.

In an attempt to overcome the foregoing problems, gussetted liners have been modified by placing a "Lazy L" seal on four gussets at each end of the liner to form square discharge and fill spouts nearer in size to the diameter of the fill and discharge spouts. The concave seals formed at the base of the spouts have proven to be weak and require support by the flexible bulk container. Precise positioning of the liner within the flexible bulk container is critical to avoid failure of the liner at the seal area.

Historically, balloons have been used for various meteorological activities. Meteorological balloons have traditionally been made from latex materials, resulting in substantial costs associated with the production of large size balloons for high altitude travel.

Likewise, condoms have historically been made from latex materials through a dipping process. Again, the costs associated with production of condoms have historically been substantial.

The present invention overcomes the foregoing problems and other problems heretofore experienced in the manufacture of liners for flexible bulk containers, latex balloons, and condoms. With reference to a first embodiment of the invention, a liner is formed on an extrusion line by the use of controlled cooling to control the extruder frost line, thereby reducing the diameter and, in selected instances, increasing the rigidity of the fill and discharge spouts of an extruded liner having an integral, unitary, flexible wall.

Utilizing the same amount of resin as used to form a typical tubular liner, as the resin is extruded in a tubular shape, predetermined lengths of the extrusion are chilled to control the diameter of fill and discharge spout sections for the liners. Air is injected into unchilled portions of the extrusion causing the extrusion to expand to a predetermined diameter, thereby forming the body sections of the liners.

As they are formed, the liners are passed through a set of pinch rolls. The pinch rolls are movable to maintain a constant volume of air between the extruder outlet and the pinch rolls to insure proper expansion of the body section of each liner as it is formed. In this manner there is formed a continuous chain of liners each having an integral, unitary, flexible wall.

The walls of the fill and discharge spouts of each liner, as a result of the controlled cooling, have substantially smaller diameters than the body portion of the liner. In selected cases, the wall of the liners may be thicker and more rigid in the fill and discharge spout sections than in the body section of the liner, thereby overcoming the bunching problems of prior art liners and eliminating the necessity of using fabric fill and discharge spouts on flexible intermediate bulk containers. Thus, the fill and discharge spouts of the liner actually replace fabric fill and discharge spouts of the flexible intermediate bulk containers, reducing complexity and attendant costs. Furthermore, the unitary formation of the liner overcomes the problem of precise positioning of the liner within the flexible intermediate bulk container.

In addition to the flexible intermediate bulk containers, the liner of the present invention may be used to line all types and sizes of containers ranging from boxes and wire cages of all sizes to tanker trucks and rail cars.

In accordance with a second embodiment of the invention, the same process as used in the formation of the liners is used to form a chain of extruded balloons. Each balloon has an integral, unitary, flexible wall defining a body section and first and second tubular spout sections.

As with the liner of the first embodiment of the invention, the portion of the flexible wall defining the spout sections may, in some instances, be thicker and more rigid than the portion of the flexible wall defining the body section. The diameters of the spout sections are substantially smaller than the diameter of the body section, and the first spout section is substantially shorter than the second spout section. As it is extruded, the flexible wall is alternately chilled to form balloons having body portions with substantially larger internal volume than the body portions of the liners of the first embodiment.

To form the balloon for receiving fluid therein, the first spout section near the body section of the extruded article is closed using a transverse seal, by knotting the spout material, or using other conventional closure methods. The distal end of the second spout section may be closed in the same manner as the first spout section. A one way valve for injecting fluid into the balloon may then be placed in the second spout section between the closed distal end and the body section of the balloon. Alternatively, the balloon may be filled with fluid through insertion of tubing or other fill devices into the open end of the second spout section prior to closing the second spout section. The extruded balloon may be filled with fluid for any number of uses, including such things as transporting meteorological equipment to appropriate altitudes.

Condoms incorporating a third embodiment of the variable diameter hollow extruded articles of the present invention may be extruded at costs substantially less than those associated with the production of latex condoms. Through co-extrusion of the resin, the possibility of pin holes is statistically eliminated. The condoms are formed using the same manufacturing process as used to extrude the liners incorporating the first embodiment and the balloons incorporating the second embodiment of the variable diameter hollow extruded articles of the present invention.

For a more complete understanding of the present invention and the advantages thereof, reference is now made to the following Detailed Description taken in conjunction with the accompanying Drawings in which:

FIGURE 1 is a front view of a prior art tubular liner;

FIGURE 2 is an illustration of the prior art tubular liner of FIGURE 1 inserted into a flexible intermediate bulk container shown in broken lines;

FIGURE 3 is a front view of a prior art gussetted liner;

FIGURE 4 is an illustration of the prior art gussetted liner of FIGURE 2 inserted into a flexible intermediate bulk container shown in broken lines;

FIGURE 5 is a front view of an extruded liner incorporating a first embodiment of the present invention;

FIGURE 6 is an illustration of the liner of FIGURE 5 inserted into a flexible intermediate bulk container shown in broken lines;

FIGURE 7 is a sectional view of the liner of FIGURE 5 inserted into a flexible intermediate bulk container;

FIGURE 8 is an illustration of the liner of FIGURE 5 inserted into a box;

FIGURE 9 is a sectional view of the apparatus of FIGURE 8;

FIGURE 10 is an illustration of the liner of FIGURE 5 inserted into a wire cage;

FIGURE 11 is a sectional view of the apparatus of FIGURE 10;

FIGURE 12 is an illustration of the liner of FIGURE 5 inserted into a flexible bulk container having a drawstring closure;

FIGURE 13 is a sectional view of the apparatus of FIGURE 12;

FIGURE 14 is an illustration of liners similar to, but larger than, the liner of FIGURE 5 inserted into a tanker truck;

FIGURE 15 is a sectional view of the apparatus of FIGURE 14;

FIGURE 16 is a sectional view of liners similar to, but larger than, the liner of FIGURE 5 inserted into a rail car;

FIGURE 17 is an illustration of a tanker truck into which a liner similar to, but larger than, the liner of FIGURE 5 may be placed horizontally;

FIGURE 18 is a sectional view of a liner similar to, but larger than, the liner of FIGURE 5, inserted horizontally into the tanker truck of FIGURE 17;

FIGURE 19 is a sectional view of a liner similar to, but larger than, the liner of FIGURE 5, inserted horizontally into a large shipping container;

FIGURE 20 is a front view of an extruded balloon incorporating a second embodiment of the present invention;

FIGURE 21 is a front view of an alternate shape of the balloon of FIGURE 20;

FIGURE 22 is a from view of an alternate shape of the balloon of FIGURE 20;

FIGURE 23 is a side view illustrating a first embodiment of the manufacturing process of the present invention;

FIGURE 24 is an enlarged sectional view taken along the section line indicated in FIGURE 23;

FIGURE 25 is a side view illustrating a second embodiment of the manufacturing process of the present invention;

FIGURE 26 is a sectional view taken along the section line indicated in FIGURE 25;

FIGURE 27 is a side view illustrating a third embodiment of the manufacturing process of the present invention;

FIGURE 28 is a side view illustrating a fourth embodiment of the manufacturing process of the present invention;

FIGURE 29 is a side view illustrating a fifth embodiment of the manufacturing process of the present invention;

FIGURE 30 is a side view illustrating the manufacture of a chain of liners incorporating the first embodiment of the present invention;

FIGURE 31 is a side view illustrating the manufacture of a chain of balloons incorporating the second embodiment of the present invention;

FIGURE 32 is a side view illustrating the manufacture of a chain of condoms incorporating a third embodiment of the present invention;

FIGURE 33 is a partial sectional side view of the extruded condom of FIGURE 32 and the extrusion line, including the co-extruder, used in extruding the condoms.

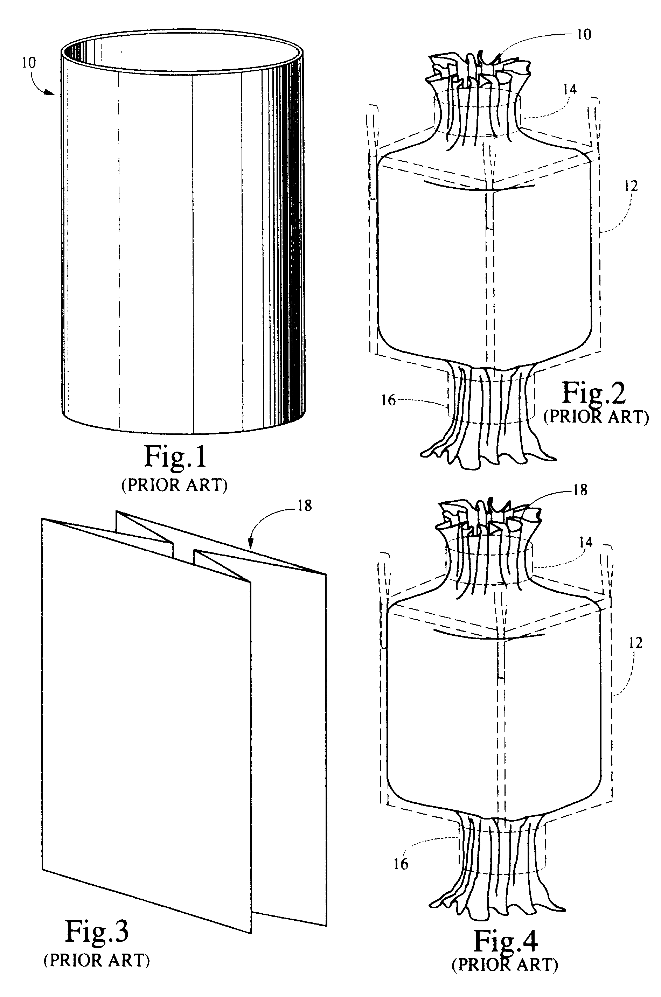

Referring now to the drawings and in particular to FIGURES 1 and 2 thereof, there is shown a prior art tubular liner 10 of the type historically used to line a flexible intermediate bulk container 12. As illustrated in FIGURE 2, when inserted into the flexible intermediate bulk container 12 the tubular liner 10 must be gathered and pulled through the fill spout 14 and through the discharge spout 16. The average diameter of the fill spout 14 and/or the discharge spout 16 is approximately 10-20", while the average diameter of the tubular liner 10 is approximately 45" so as to equal the inside diameter of the container 12. Thus, as illustrated in FIGURE 2, when the tubular liner 10 is inserted into the flexible intermediate bulk container 12, the liner 10 is gathered and bunched into the fill spout 14 and into the discharge spout 16, interrupting the flow of material into or out of the container 12.

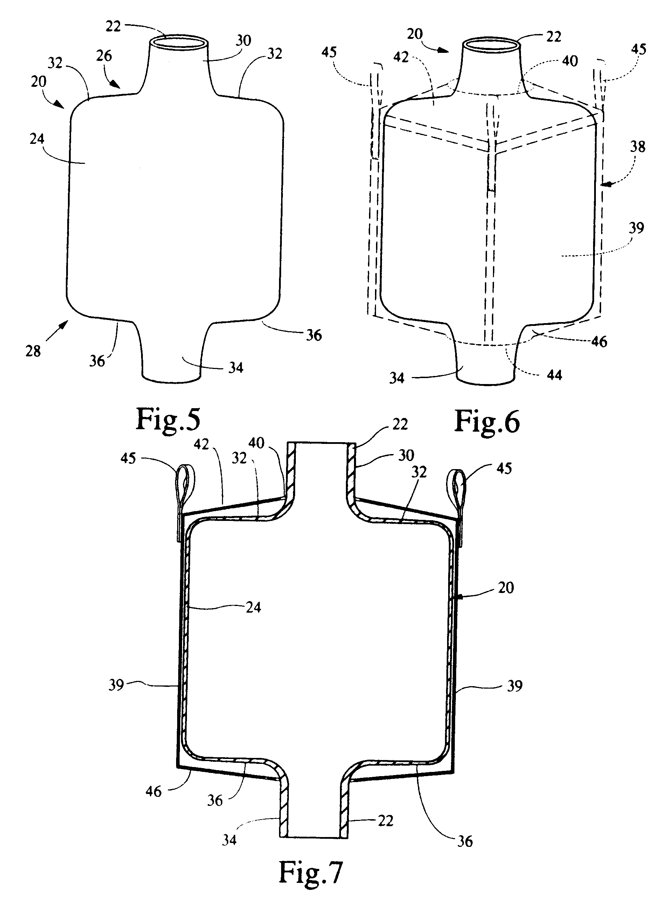

Referring now to FIGURES 3 and 4, when a prior art gussetted liner 18 is inserted into a flexible intermediate bulk container 12, the end portions of the liner 18, also approximately 45" in diameter, are gathered and bunched into the fill spout 14 and into the discharge spout 16. To maintain the position of the prior art liners 10 and 18, for placement over a fill pipe during the fill process requires the flexible intermediate bulk container 12 to have a fabric fill spout 14. Similarly, to maintain the positioning of the liner during the discharge process, the flexible intermediate bulk container 12 is required to have a fabric discharge spout 16.

The prior art gussetted liner 18 may be modified by placing a "Lazy L" seal in four of the gussets in each end of the liner to form square fill and discharge sections (not shown). As a result of such modification, the stitched liners must be precisely positioned within the flexible intermediate bulk container 12 for support by the container to prevent failure of the liner 18 at the seal points.

An extruded liner 20 incorporating a first embodiment of the variable diameter hollow extruded articles of the present invention, as shown in FIGURE 5, overcomes the foregoing problems involved with use of the prior art liners 10 and 18, alleviates the necessity of having fabric fill and discharge spouts on flexible intermediate bulk containers 12, and alleviates the problem of precise positioning of the liners within the flexible intermediate bulk containers 12. As shown in FIGURE 5, the extruded liner 20 is made up of an integral, unitary, flexible wall 22 which defines a body section 24 having a first end 26 and a second end 28. The integral, unitary, flexible wall 22 extends from the first end 26 of the body section 24 to define a fill spout section 30 connected to the body section 24 at the first end 26 by a first shoulder section 32. The integral, unitary, flexible wall 22 extends from the second end 28 of the body section 24 to define a discharge spout section 34 connected to the second end 28 of the body section 24 through a second shoulder section 36.

As illustrated in FIGURES 6 and 7, the extruded liner 20 of the present invention may be used for lining flexible intermediate bulk containers 38 of the type having a four sided stitched perimeter wall 39, an upper wall 42, a lower wall 46, and lift straps 45. The liner 20 may be extruded such that the portions of the integral, unitary, flexible wall 22 defining the fill spout section 30 and the discharge spout section 34 are thicker and more rigid than the body section 24. The integral, unitary, flexible wall 22 may be extruded such that the thickness in the body section 24 of the extruded liner gradationally increases where the body section 24 merges into the first and second shoulder sections 32 and 36, respectively, with the maximum thickness and rigidity of the wall 22 being in the fill spout section 30 and the discharge spout section 34 of the extruded liner 20.

In those instances wherein there is increased thickness and rigidity of the flexible wall 22 in the fill spout section 30, the discharge spout section 34, the first shoulder section 32, and the second shoulder section 36, the need for fabric fill and discharge spouts on the flexible intermediate bulk container 38 is alleviated, as illustrated in FIGURE 6. Likewise, the need of precise placement of the liner within the flexible intermediate bulk container 38 to avoid failure of the liner in the shoulder sections 32 and 36 and in the fill and discharge spout sections 30 and 34, respectively, is alleviated.

As the liner 20 is extruded, the outside diameter of the fill spout section 30 is controlled at a predetermined diameter, which may be the diameter needed to match the inside diameter of a fill opening 40 in the upper wall 42 of the flexible intermediate bulk container 38. Likewise, the outside diameter of the discharge spout section 34 of the extruded liner 20 is controlled at a predetermined diameter as the liner is extruded, which may match the inside diameter of a discharge opening 44 in the lower wall 46 of the flexible intermediate bulk container 38. Thus, when the liner 20 is inserted into the flexible intermediate bulk container 38, the fill spout section 30 of the liner 20 is inserted through the fill opening 40 of the flexible intermediate bulk container 38.

In those instances wherein the fill spout section is extruded to be sufficiently thick and rigid to maintain position over a fill pipe (not shown) to function as the fill spout of the flexible intermediate bulk container 38 during the fill process, the need for a fabric fill spout in the container 38 is alleviated. Similarly, the discharge spout section 34 may be extruded to be sufficiently thick and rigid to function as the discharge spout of the flexible intermediate bulk container 38, alleviating the need for a fabric discharge spout on the container 38. The formation of the liner into separate fill, discharge, and body sections, with the fill spout section 30 and discharge spout section 34 having the substantially same diameter as the fill opening 40 and discharge opening 44, respectively, of the flexible intermediate bulk container 38 overcomes the problem of bunching and crowding of excess liner material in the fill and discharge areas as has been experienced with prior art liners.

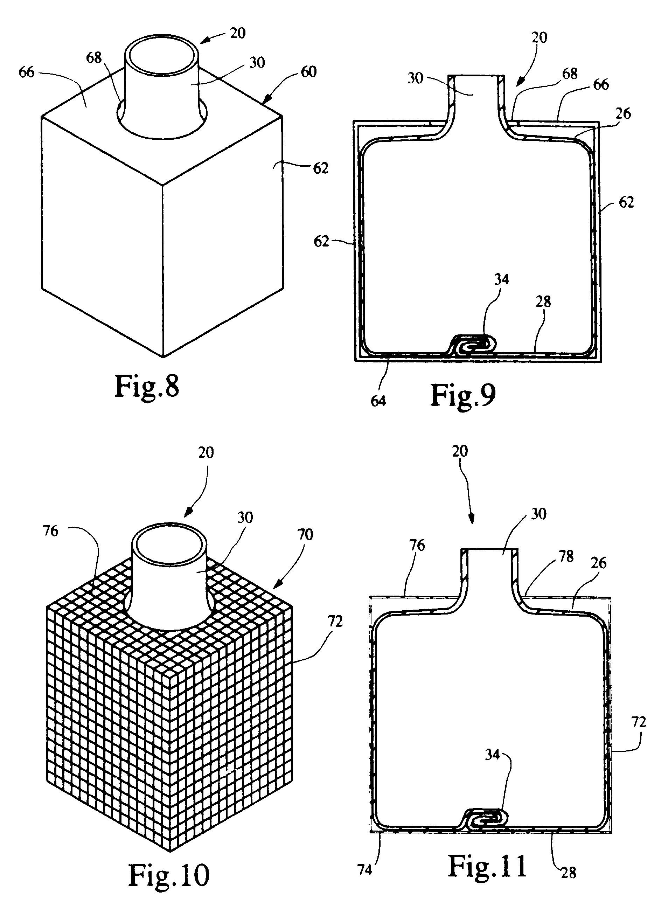

Referring now to FIGURES 8 and 9, in addition to lining flexible intermediate bulk containers, the liner 20 may be inserted into a conventional box container 60 for receiving flowable materials, and having a four sided rigid perimeter wall 62, a bottom wall 64, and a top wall 66. The top wall 66 of the box 60 may have a fill opening 68 therein through which the fill spout 30 of the liner 20 extends upwardly during the fill process.

When the liner 20 is inserted into the box 60 for receiving the flowable materials, the discharge spout 34 of the liner 20 is closed and folded under the second end 28 of the body section 24 of the liner 20.

In the event the top wall 66 of the box 60 is of another conventional type, such as a four part folded closure (not shown) or a single flap closure (not shown), the top wall 66 of the box 60 remains open to allow the fill spout 30 of the liner 20 to extend upwardly therethrough during the fill process. Upon completion of the fill process and while in storage, the fill spout 30 of the liner 20 is closed and folded onto the first end 26 of the body section 24, or the fill spout 30 may be heat sealed, may have attached thereto a closure of the type covered under U.S. Patent Number 2,906,429, and sold under the trademark "Tri-Sure", or may have attached other conventional closure.

Referring now to FIGURES 10 and 11, in the same way as used to line the box 60, the liner 20 may be inserted into a wire cage type container 70 having a four sided rigid perimeter wall 72, a bottom wall 74, and a top wall 76. The top wall 76 of the wire cage 70 may have a fill opening 78 therein through which the fill spout 30 of the liner 20 extends upwardly during the fill process. When the liner 20 is inserted into the wire cage 70, the discharge spout 34 of the liner 20 is closed and folded under the second end 28 of the body section 24 of the liner 20.

In the event the top wall 76 of the wire cage 70 is of some other conventional type, such as a single part closure (not shown), the top wall 76 of the wire cage 70 remains open to allow the fill spout 30 of the liner 20 to extend upwardly therethrough during the fill process. Upon completion of the fill process and while in storage, the fill spout 30 of the liner 20 is closed and folded onto the first end 26 of the body section 24, or the fill spout 30 may be heat sealed may have attached thereto a closure of the type covered under U.S. Patent Number 2,906,429, and sold under the trademark "Tri-Sure", may have attached or other conventional closure.

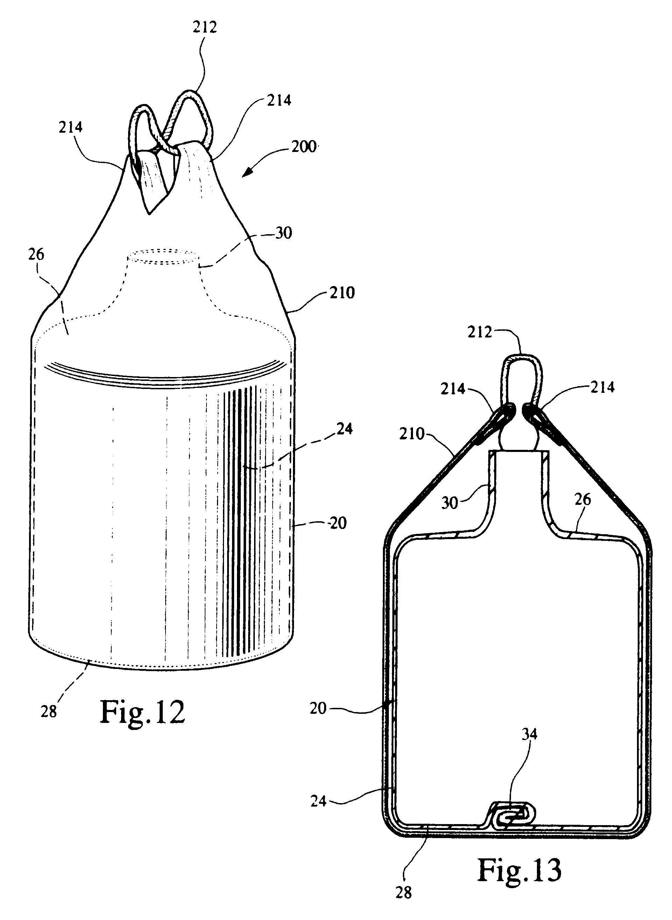

Referring now to FIGURES 12 and 13, the liner 20 may be used to line flexible intermediate bulk containers 200 of the type having a flexible perimeter wall 210. A drawstring 212 extends through loops 214 formed by folding over and stitching portions of the perimeter wall 210. Flexible intermediate bulk containers 200 have no fill nor discharge spouts. Thus, upon loosening of the drawstring 212, the loops 214 spread apart to expose the fill spout section 30 of the liner 20 which then acts as the fill spout of the container 200 during the fill process. The discharge spout 34 of the liner 20 is closed and folded under the second end 28 of the body section 24 of the liner 20. As with wire cages, boxes, and containers of the type shown in FIGURES 6 and 7, upon completion of the fill process and while in storage, the fill spout 30 of the liner 20 is closed and folded onto the first end 26 of the body section 24 or the fill spout 30 may be heat sealed, may have attached thereto a closure of the type covered under U.S. Patent Number 2,906,429, and sold under the trademark "Tri-Sure", or may have attached other conventional closure.

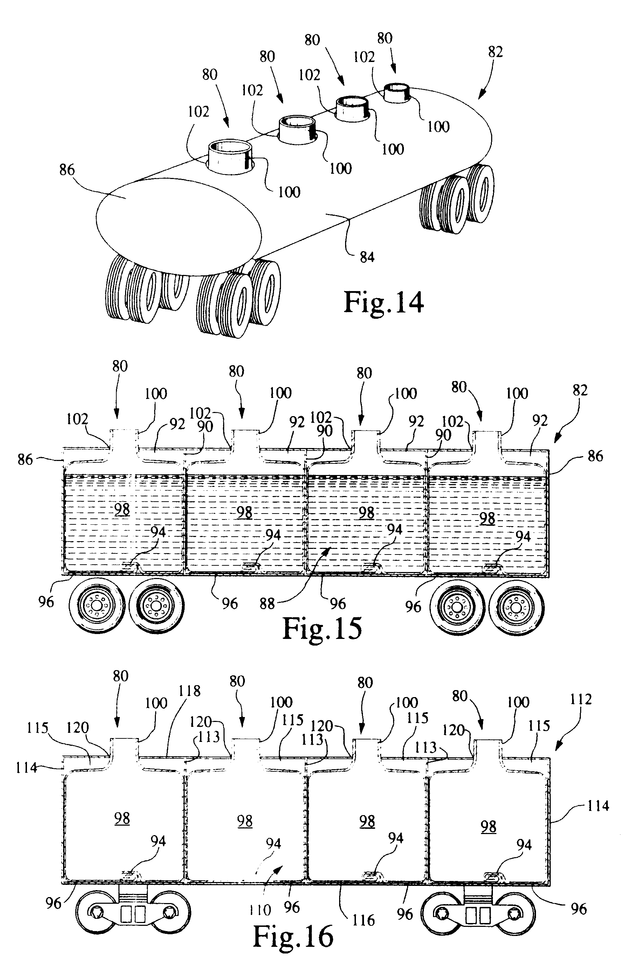

In addition to lining flexible containers, boxes, and wire cages, the liners incorporating the first embodiment of the variable diameter hollow extruded articles of the present invention may be used to line tanker trucks as illustrated in FIGURES 14 and 15. A liner 80, having larger dimensions and greater interior capacity than smaller liners used to line flexible intermediate bulk containers, boxes and wire cages, is inserted into the tanker truck 82 having a substantially cylindrical perimeter wall 84 and two opposed end walls 86 defining an interior area 88 for receiving flowable materials, including liquids.

In the event the interior area 88 of tanker 82 is divided by internal walls 90 into separate compartments 92, a liner 80 having substantially the same dimensions as a single compartment 92 is placed therein, with the discharge spout 94 of the liner 80 being closed and folded under the second end 96 of the body portion 98 of the liner 80. For filling and extraction of the flowable materials from the tanker compartments 92, the fill spouts 100 of the liners 80 extend upwardly through fill openings 102 in the perimeter wall 84 of the tanker 82.

Likewise, as illustrated in FIGURE 16, the liner 80 may also be used to line the interior area 110 of a rail car 112 defined by a four sided perimeter wall 114, a bottom wall 116, and in some instances a top wall 118. The interior area 110 of the rail car 112 may be divided by internal walls 113 into separate compartments 115, with a liner 80 having substantially the same dimensions as a single compartment 115 being placed therein. In those instances wherein the rail car 112 has a top wall 118, the fill spouts 100 of the liners 80 extend upwardly through fill openings 120 for receiving the flowable materials during the fill process.

As with the tanker 82, when the liner 80 is inserted into the rail car 112, the discharge spout 94 is closed and folded under the second end 96 of the body section 98 of the liner 80. Upon completion of the fill process, the fill spout 100 of the liner 80 inserted into the rail car 112 or the tanker 82 is closed and folded onto the body section 98 of the liner 80, or the fill spout 100 may be heat sealed or have attached thereto conventional closure such as closure of the type covered under U.S. Patent Number 2,906,429, and sold under the trademark "Tri-Sure". The fill opening 120 in the rail car or the fill opening 102 in the tanker 82 may be equipped with conventional closure (not shown).

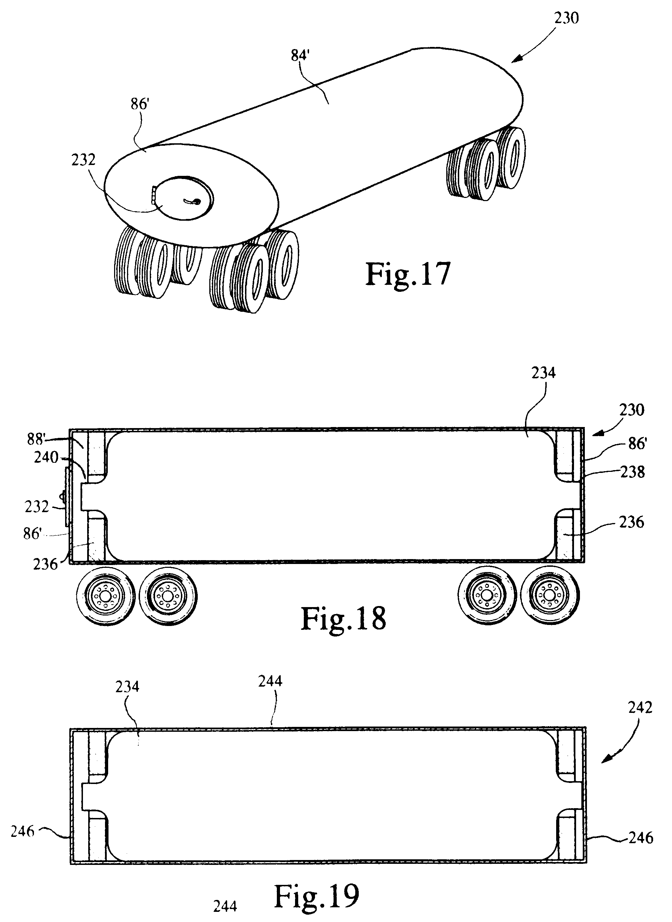

Referring now to FIGURES 17 and 18, there is shown a tanker truck 230 similar to the tanker 82 of FIGURE 14, wherein reference numerals referring to elements similar to those of FIGURE 14 being differentiated by a prime "'" designation. The tanker 230 differs from the tanker 82 of FIGURE 14 in that it has a fill and discharge opening 232 in the end wall 86', and has no fill openings 102 in the perimeter wall 84'.

As illustrated in FIGURE 18, a liner 234, incorporating the first embodiment of the present invention and having an interior capacity substantially greater than that of the liners 80 inserted into the tanker 82, is inserted into the tanker 230 in a generally horizontal orientation for receiving flowable materials, including liquids therein. Bulkheads 236 positioned within the interior area 88' and near the end walls 86' of the tanker 230, secure the filled liner 234 within the interior area 88' to protect the liner 234 during transportation. The discharge and fill spouts 238 and 240, respectively are closed by sealing, tying off, or attaching thereto conventional closure such as closure of the type covered under U.S. Patent Number 2,906,429, and sold under the trademark "Tri-Sure".

The liner 234 of FIGURE 18 may also be inserted in a generally horizontal orientation into a large shipping container 242, having a four sided rigid perimeter wall 244 and opposed end walls 246 as shown in FIGURE 19. The end walls 246 may be opened for filling and discharge of the contents of the liner 234.

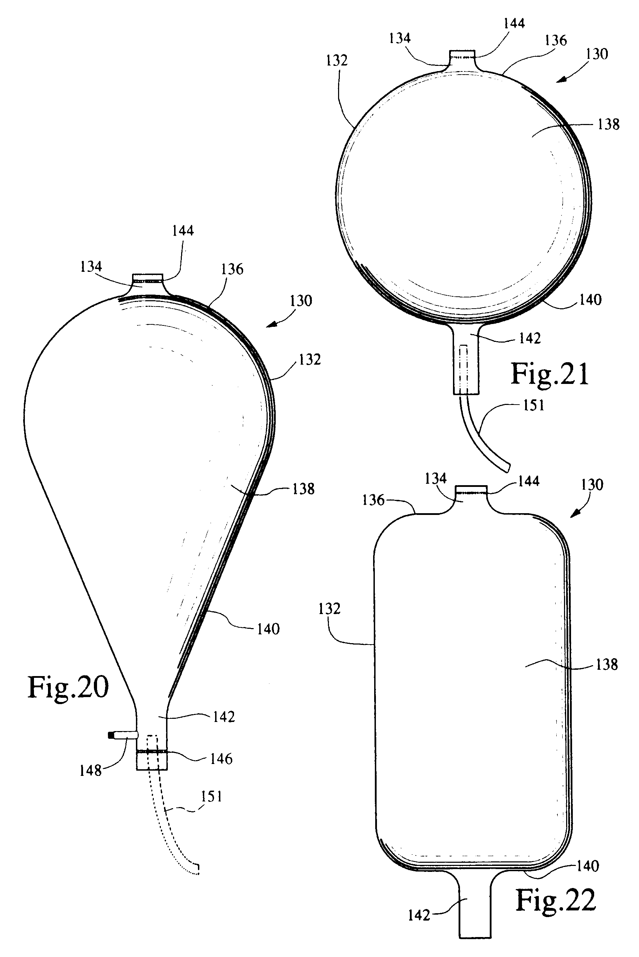

Referring now to FIGURE 20 there is shown a balloon 130 incorporating a second embodiment of the variable diameter hollow extruded articles of the present invention. The balloon 130 has an integral, unitary, flexible wall 132 defining a first tubular spout section 134, a first shoulder section 136, a body section 138, a second shoulder section 140, and a second tubular spout section 142. As with the extruded liners 20 and 80 of the first embodiment of the extruded articles of the present invention, that portion of the integral, unitary, flexible wall 132 defining the spout sections 134 and 142 of the balloon 130 may be substantially thicker and more rigid than that portion of the flexible wall 132 defining the body section 138 of the balloon 130. Likewise, the diameters of the spout sections 134 and 142 are substantially smaller than the diameter of the body section 138 of the balloon 130, and the first spout section 134 is substantially shorter than the second spout section 142.

To form the balloon, the first spout section 134 is closed by making a transverse seal 144 in the first spout section 134 near the body section 138 of the balloon 130, by heat sealing, by tying off the first spout section 134 (not shown), or through any of a number of conventional closure methods (not shown). Through similar closure methods, including the possible use of a transverse seal 146 made in the distal end of the second spout 142, the second spout section 142 may be closed and a valve 148 placed between the seal 146, or other method of closure, and the body section 138 of the balloon 130 to allow inflation of the balloon 130. As shown in phantom, the valve 148 may be omitted and an inflation source 151 may be inserted into the distal end of the second spout section 142, and the balloon 130 inflated prior to closure of the distal end of the second spout section 142.

As illustrated in FIGURES 20, 21 and 22, the balloon 130 may be extruded in any number of shapes and sizes, including shapes similar to those of the first embodiment liners (not shown), each of which may be inflated and sealed using any combination of the methods discussed in the preceding paragraphs. Extrusion of the balloons as integral units eliminates the attendant costs in joining together separate extruded sheets to form the balloon envelop. The extruded balloons may be used for many purposes, including meteorological activities.

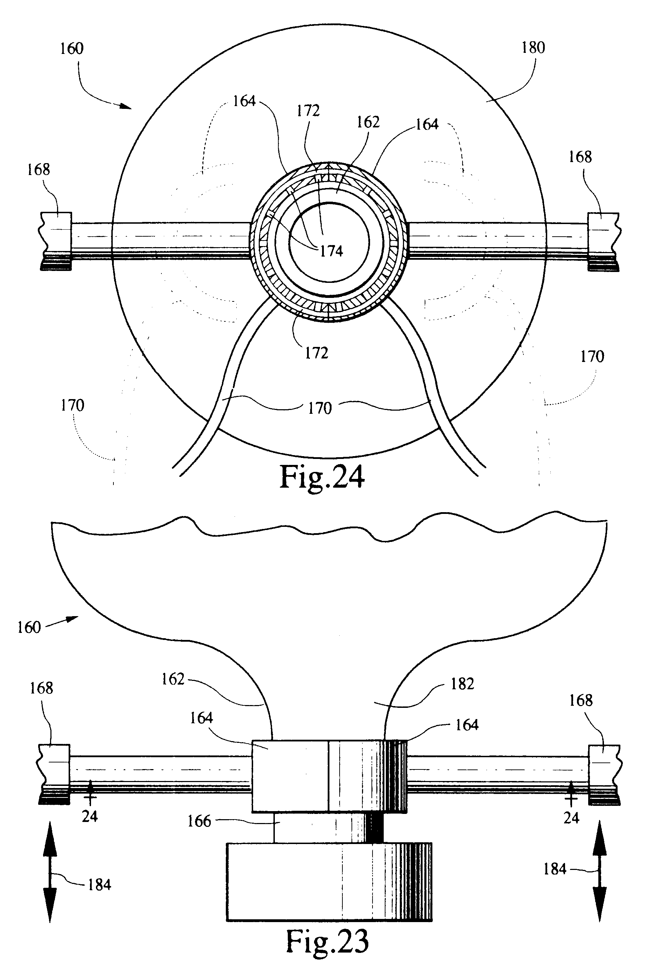

Referring now to FIGURES 23 and 24, there is illustrated a first embodiment of the manufacturing process of the present invention. The variable diameter hollow extruded article 160 of the present invention is formed through a process wherein the same amount of resin as used in the extrusion of prior art tubular and gussetted liners and film sheets sewn together to form balloons is extruded to form the integral, unitary, flexible wall 162 of the article 160. The resin is preferably selected from the group consisting of thermoplastics and elastomers. By moving the frost line of the extruder or varying the injection of air or gas into the interior area defined by the flexible wall 162, the diameter of the flexible wall 162 is altered to define the shape of the variable diameter hollow extruded article.

Chilling medium such as chilled air, water, mist, or gas may be used to move the extruder frost line to alter the diameter of the extruded article 160, as illustrated in FIGURES 23, 24 and 30. As the resin is extruded to form the flexible wall 162, a set of split rings 164 retractably mounted adjacent to the extruder outlet 166 are positioned upon actuation of cylinders 168, or other conventional positioning control device, to surround the flexible wall 162 as it is extruded. Chilling medium from a chilling medium source (not shown) is injected through conduit 170 into an interior channel 172 in the split rings 164, and from the interior channel 172 out through a plurality of openings 174 to surround the flexible wall 162 for a predetermined period of time to control the diameter of a predetermined length of the flexible wall 162 to form a first or fill spout section 176 of a first variable diameter hollow extruded article 160. The split rings 164 are moveable as indicated by directional arrows 184 in relation to the extruder outlet 166 to allow the split rings 164 to move with the flexible wall 162 as it is extruded to provide sufficient chilling of the wall 162 to set the diameter of the fill and discharge spout sections 176 and 182, respectively, of the extruded article 160.

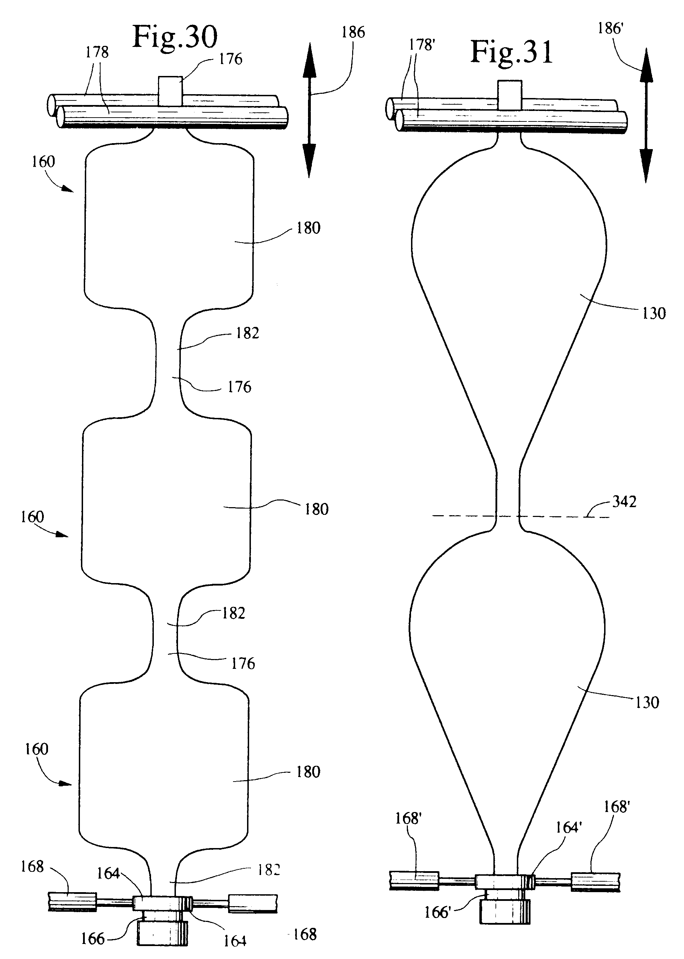

Once the predetermined length of the flexible wall 162 has been chilled to form the first or fill spout section 176 of a first extruded article 160, injection of chilling medium into the split rings 164 ceases as the split rings 164 are withdrawn upon actuation of the cylinders 168, as shown in phantom in FIGURE 24, and are moved back into position nearer the extruder outlet 166. The first or fill spout section 176 of the first extruded article 160 is passed through a set of movable pinch rolls 178, as shown in FIGURE 30. Air or other fluid is then injected into the interior of the flexible wall 162 at a predetermined volume to expand the diameter of the unchilled portion of the flexible wall 162 as it is extruded to form the body section 180 of the first extruded article 160. The pinch rolls 178 are moveable as indicated by directional arrows 186 in relation to the extruder outlet 166 to maintain a constant volume of air between the extruder outlet 166 and the pinch rolls 178 to ensure proper expansion of the body section 180 of the next extruded article 160 being formed.

After the body section 180 of the first extruded article 160 has been expanded to a predetermined diameter sufficient to create a liner capacity equal to that of the container to be lined, equal to the capacity to receive a sufficient volume of fluid to inflate a balloon, or equal to the predetermination diameter of a condom, the split rings 164 are positioned adjacent to and surrounding the wall 162 upon actuation of the cylinders 168. Chilling medium is again injected through the split rings 164 to surround the flexible wall 162 for a predetermined period of time as the wall 162 is extruded, to control the diameter of the flexible wall 162 to form the second or discharge spout section 182 of the first extruded article 160 and the first or fill spout section 176 of a second extruded article 160. Chilled air or other chilling medium includes anything having a temperature less than the temperature of the fluid injected into the interior of the extrusion or less than the temperature of the flexible wall 162 as it is extruded.

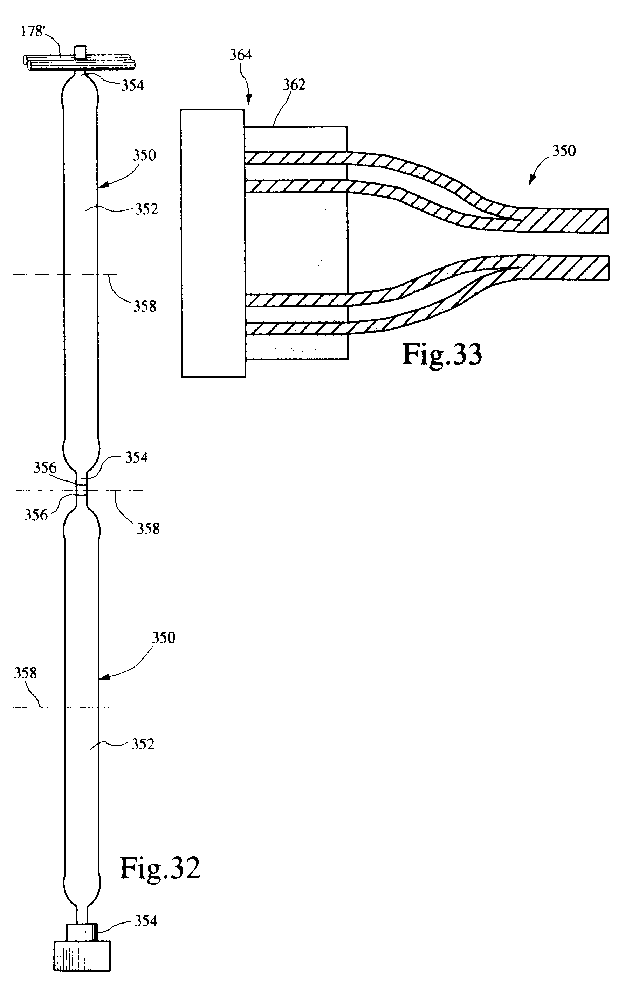

As illustrated in FIGURE 30, the above steps are repeated to form a chain of extruded liners, balloons, or condoms. By altering the length of the chilled portion of the extruded article, the length of the unchilled portion of the article, and the volume of fluid injected into the unchilled portion as it is extruded, the same steps as used to form the chain of articles shown in FIGURE 30 will form a chain of extruded balloons 130 having an alternate shape, as illustrated in FIGURE 31, or a chain of condoms 350 as shown in FIGURE 32. Thus, by changing the length of the time period that chilling medium is directed onto the extruded article, the length of the time intervals between such time periods, and the volume of fluid injected into the unchilled portion of the extruded article, the article may be formed into the size and shape required for the desired use.

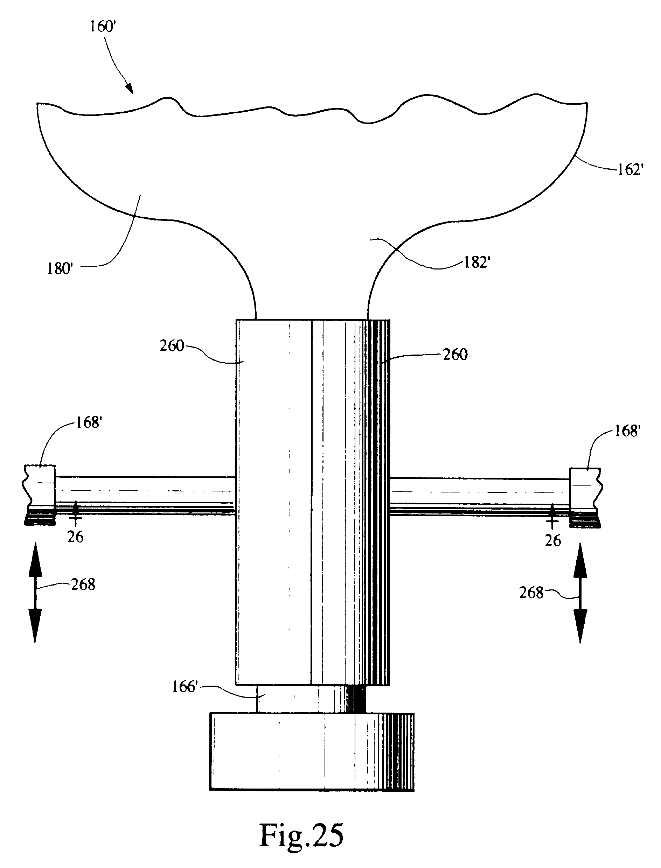

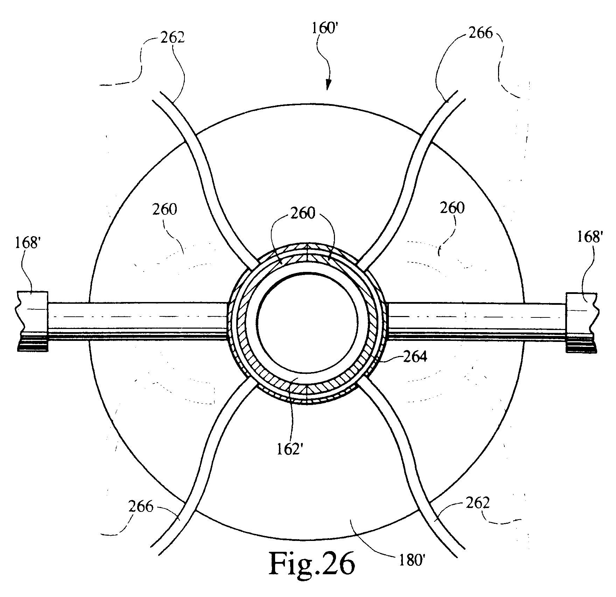

To the extent that similar parts appear in FIGURES 25 through 30 as in FIGURES 23 and 24 the same reference numbers are used, but are differentiated by a prime "'" designation. Referring now to FIGURES 25 AND 26, a second embodiment of the manufacturing process of the present invention incorporates the use of a moveable split chilled mold 260 to surround the flexible wall 162' as it is extruded to form the first or fill spout section (not shown) and the second or discharge spout section 182' of the first variable diameter hollow extruded article 160'. Like the split rings 164 of the first embodiment of the manufacturing process illustrated in FIGURES 23 and 24, the mold 260 comprises two halves retractably mounted adjacent to the extruder outlet 166' for positioning upon actuation of cylinders 168' or other conventional positioning control device.

When the mold 260 is positioned to surround and contact the flexible wall 162', chilled fluid is injected through conduit 262 into an interior channel 264 in the mold 260, chilling the mold 260 in direct contact with the flexible wall 162', and thereby chilling the flexible wall 162' to control the diameter thereof. The fluid exits the interior channel 264 through discharge conduit 266 as chilled fluid is injected into the interior channel 264 through conduit 262 to provide for continuous chilling of the mold 260 while in contact with the flexible wall 162'.

After the flexible wall 162' has been chilled for a period of time sufficient to control the diameter of the flexible wall 162', the injection of chilled fluid into the interior channel 264 ceases and the mold is retracted as illustrated in phantom in FIGURE 26. The mold is moveable in relation to the extruder outlet 166' as indicated by directional arrows 268 to allow the chilled mold 260 to move with the flexible wall 162' to continue chilling of the spout sections of the flexible wall 162' as the extrusion of the body portion 180' of the extruded article 160' continues.

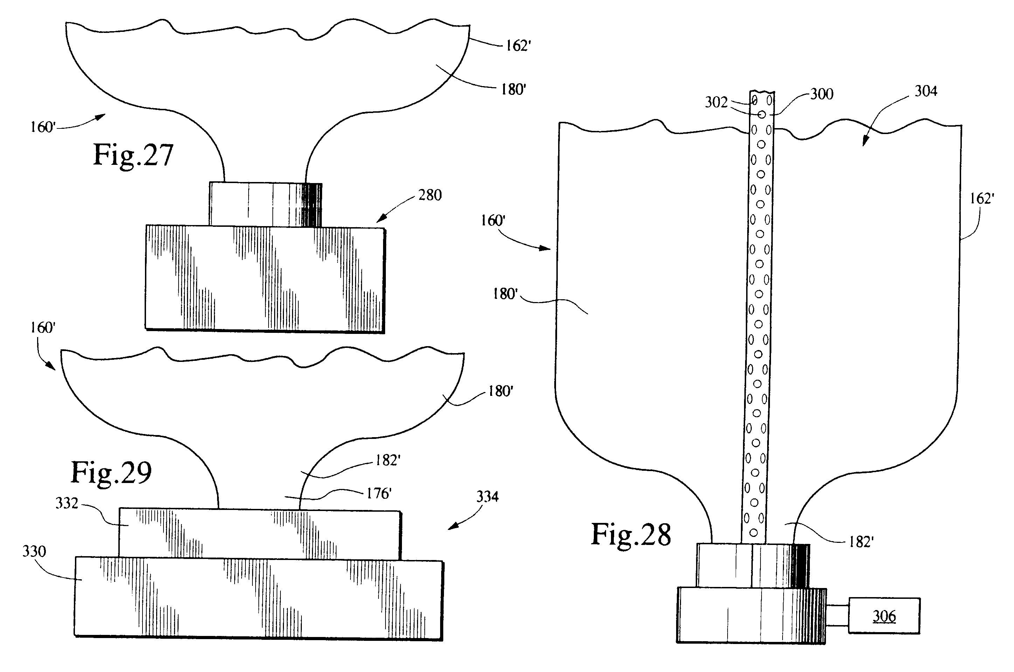

In a third embodiment of the manufacturing process of the present invention, as shown in FIGURE 27, the diameter of the flexible wall 162' is controlled by varying the volume of air or other fluid injected into the extruded article 160' during the formation of the body portion 180' of the extruded article 160'. The frost line of the extrusion line 280 is not moved. This embodiment of the invention may also be combined with any of the other embodiments of the manufacturing process of the invention.

Referring now to FIGURE 28, there is illustrated a fourth embodiment of the manufacturing process of the present invention wherein a vacuum line 300 having openings 302 therein is inserted into the interior area 304 defined by the flexible wall 162' of the extruded article 160' as it is extruded. The vacuum line 300 is attached to a vacuum source 306 for evacuating the interior area 304 defined by a predetermined length of the flexible wall 162' to control the diameter of the flexible wall 162' to form the first or fill spout section (not shown) and the second or discharge spout section 182' of the extruded article 160' as it is extruded.

After a spout section is formed, evacuation of the interior area 304 ceases and air or other fluid is injected into the interior area 304 of the flexible wall 162' extruded after the length of the flexible wall 162' defining the interior area 304 evacuated to form the spout sections in the extruded article 160'. Injection of fluid into the interior area 304 of the flexible wall 162' not previously evacuated causes the diameter of the flexible wall 162' to expand to form the body section 180' of the extruded article 160'.

Evacuation of the interior area 304 is again commenced, after the body section 180' is formed, to again form spout sections in the flexible wall 162'. Each step of the process is repeated, thereby forming a continuous chain of extruded articles 160'. The fourth embodiment of the manufacturing process of the present invention may be combined with any of the other embodiments of the of the manufacturing process to form the variable diameter hollow extruded articles 160' of the present invention.

A fifth embodiment of the manufacturing process of the present invention, as illustrated in FIGURE 29, incorporates the use of a gear pump 330 and a automatically controlled adjustable die 332 in the extrusion line 334 to ensure a more complete melt of the resin extruded, thereby providing greater control over thickness and shape of the spout sections 176' and 182' and body sections 180' of the variable diameter hollow extruded articles 160' of the present invention. The adjustable die 332 may be manually or computer controlled to reduce the diameter of the die, thereby reducing the diameter of the extrusion to form the spout sections 176' and 182' of the extruded articles 160'. To form the body sections 180' of the extruded articles 160' the diameter of the adjustable die 332 is increased, thereby increasing the diameter of the extrusion. The fifth embodiment of the manufacturing process may be combined with any one or a combination of the other embodiments of the manufacturing process of the present invention to form the extruded articles 338.

Referring now to FIGURE 30, there is illustrated the extrusion of a chain of extruded articles 180 of the present invention, as previously described. After passing through the pinch rolls 178, the articles may be separated by cutting along points indicated by lines 340. Similarly, FIGURE 31 illustrates the extrusion of a chain of balloons 130 incorporating the second embodiment of the variable diameter hollow extruded articles of the present invention, having one of the many possible shapes. After passing through the pinch rolls, the balloons may be separated by cutting along points indicated by line 342.

Referring now to FIGURE 32, any of the embodiments of the manufacturing process of the present invention may be used to extrude a chain of condom pairs 350 incorporating a third embodiment of the variable diameter hollow extruded articles of the present invention. The condoms 350 are extruded to have the same general shape as the liners incorporating the first embodiment of the variable diameter hollow extruded articles of the present invention. The condoms 350 are, however, substantially smaller than the liners, with the body section 352 proportionally longer than the body section of the liners, to form two condoms when separated. The spout sections 354 of the condom pairs 350 may be heat sealed or sealed through other conventional methods at points 356 in the chain of condom pairs 350 as they are extruded or after they pass through the pinch rolls 178'. To separate the condom pairs 350 after they pass through the pinch rolls 178', they may be cut along points indicated by lines 358.

As illustrated in FIGURE 33, the utilization of a co-extruder 362 in the extrusion line 364 statistically eliminates the possibility of pin holes occurring in the extruded condoms 350. Likewise, the liners and balloons incorporating the first and second embodiments of the variable diameter hollow extruded articles of the present invention may be co-extruded to insure greater uniformity in the flexible wall of the extruded articles.

Although preferred embodiments of the invention have been illustrated in the accompanying Drawings and described in the foregoing Detailed Description, it will be understood that the invention is not limited to the embodiments disclosed but is capable of numerous rearrangements and modifications of parts and elements without departing from the spirit of the invention.

## Claims

1. A variable diameter hollow extruded article comprising:

    an integral, unitary, flexible wall;

    a tubular body section defined by the flexible wall and having first and second ends;

    a first tubular spout section defined by the flexible wall and extending from the first end of the body section; and

    a second tubular spout section defined by the flexible wall and extending from the second end of the body section.

2. The variable diameter hollow extruded article of Claim 1, further comprising first and second shoulder sections connecting the first and second spout sections to the first and second ends of the body section, respectively, wherein the thickness of the integral unitary flexible wall defining the shoulder sections gradationally increases with the least thickness in the shoulder sections being nearest the body section of the variable diameter hollow extruded article and the greatest thickness of the shoulder sections being nearest the tubular spout sections of the extruded article.

3. The variable diameter hollow extruded article of Claim 1 or Claim 2, wherein the integral, unitary, flexible wall further comprises an extruded resin selected from the group consisting of thermoplastics and elastomers.

4. The variable diameter hollow extruded article of any preceding claim, wherein the diameters of the first and the second tubular spout sections are substantially smaller than the diameter of the body section of the variable diameter hollow extruded article.

5. The variable diameter hollow extruded article of any preceding claim, wherein the integral, unitary, flexible wall is substantially more rigid in the first and the second tubular spout sections than in the body section of the extruded article.

6. The variable diameter hollow extruded article of any preceding claim, further comprising a transverse seal in the first tubular spout section closing the spout section near the body section of the extruded article to form an envelope for receiving fluid therein.

7. The variable diameter hollow extruded article of any preceding claim, further comprising a transverse seal closing the distal end of the second tubular spout section of the extruded article.

8. The variable diameter hollow extruded article of Claim 7, further comprising means for suspending a payload from a fluid filled extruded article.

9. A process for manufacturing variable diameter hollow extruded articles comprising the steps of:

extruding a heated resin through a die having a predetermined diameter to form a tubular shaped flexible extrusion having a leading edge;

rapidly cooling a predetermined length of the leading edge of the extrusion to control the diameter of the extrusion to form a first tubular spout section of a first hollow extruded article;

passing the first spout section of the first hollow extruded article through a set of pinch rolls;

ceasing the rapid cooling of the extrusion for a predetermined period of time as the extrusion is continuously pulled through the pinch rolls;

injecting fluid into the interior of that portion of the extrusion following the first spout section at a predetermined volume to expand a predetermined length of the extrusion to a predetermined diameter to form the body section of the first extruded article;

ceasing the injection of fluid into the interior of the extrusion; and

rapidly cooling a predetermined length of the extrusion to control the diameter of the extrusion to form a second spout section of the first extruded article.

10. The process for manufacturing variable diameter hollow extruded articles of Claim 9, further comprising the step of continuously repeating the process steps to form a continuous chain of extruded articles.

11. The process for manufacturing variable diameter hollow extruded articles of Claim 9 or Claim 10, further comprising the step of separating the articles by making transverse cuts to separate the second tubular spout section of a first extruded article from the first tubular spout section of a second extruded article.

12. The process for manufacturing variable diameter hollow extruded articles of any one of Claims 9 to 11, wherein the step of rapidly chilling the leading edge of the extrusion forms the discharge section of a first liner.

13. The process for manufacturing variable diameter hollow extruded articles of Claim 12, wherein the step of rapidly chilling the extrusion after forming the body section of the first liner sets the diameter of the extrusion to a predetermined diameter to form the fill section of the first liner and the discharge section of0the second liner to be formed.

14. The process for manufacturing variable diameter hollow extruded articles of Claim 9, wherein the step of rapidly chilling the leading edge of the extrusion forms the first tubular spout section of a balloon.

15. The process for manufacturing variable diameter hollow extruded articles of Claim 14, wherein the step of rapidly chilling the extrusion after forming the body section of the first balloon sets the diameter of the extrusion to a predetermined diameter to form the second tubular spout section of the first balloon and the first tubular spout section of the second balloon to be formed.

16. The process for manufacturing variable diameter hollow extruded articles of Claim 9, wherein the step of rapidly chilling the leading edge of the extrusion forms the first tubular spout section of a first pair of condoms extruded as one long extrusion having a cylindrically shaped body.

17. The process for manufacturing variable diameter hollow extruded articles of Claim 16, wherein the step of rapidly chilling the extrusion after forming the body section of the first pair of condoms sets the diameter of the extrusion to a predetermined diameter to form the second tubular spout section of the first pair of condoms and the first tubular spout section of a second pair of condoms to be formed.

18. The process for manufacturing variable diameter hollow extruded articles of Claim 17, further comprising the step of placing transverse seals in the first and second tubular spout sections of each pair of extruded condoms.

19. The process for manufacturing variable diameter hollow extruded articles of Claim 18, further comprising the step of separating the pairs of condoms by making a first transverse cut in the body section midway between the first and second tubular spout sections of the extrusion and a second transverse cut in the spout sections between the transverse seals.

20. The process for manufacturing variable diameter hollow extruded articles of Claim 9, wherein the rapid cooling of the extrusion further comprises the step of applying chilled fluid onto the extrusion through split rings retractably mounted adjacent to the extruder to surround the extrusion as it is extruded.

21. The process for manufacturing variable diameter hollow extruded articles of Claim 20, further comprising the step of moving the split rings in a direction generally away from the extruder and with the movement of the extrusion as it is extruded to provide sufficient chilling of the extrusion to set the diameter of the extrusion.

22. The process for manufacturing variable diameter hollow extruded articles of Claim 9, wherein the rapid cooling of the extrusion further comprises the step of positioning a chilled mold to surround and contact a predetermined length of the extrusion.

23. The process for manufacturing variable diameter hollow extruded articles of Claim 22, further comprising the step of moving the chilled mold in a direction generally away from the extruder and with the movement of the extrusion as it is extruded to5provide sufficient chilling of the extrusion to set the diameter of the extrusion.

24. The process for manufacturing variable diameter hollow extruded articles of Claim 9, further comprising the step of varying the distance between the pinch rolls and the extruder to maintain a constant volume of fluid between the extruder and the pinch rolls as the body section of the extruded articles pass between the pinch rolls.

25. A process for manufacturing variable diameter hollow extruded articles comprising the steps of:

extruding a heated resin through a die to form a tubular shaped flexible extrusion having a leading edge;

controlling the diameter of a predetermined length of the extrusion to form a first tubular spout section of a first hollow extruded article;

passing the first spout section of the first hollow extruded article through a set of pinch rolls;

injecting fluid into the interior are of that portion of the extrusion following the first spout section at a predetermined volume to expand a predetermined length of the extrusion to a predetermined diameter to form the body section of the first extruded article;

ceasing the injection of fluid into the interior area of the extrusion; and

controlling the diameter of a predetermined length of the extrusion to form a second spout section of the first extruded article.

26. The process for manufacturing variable diameter hollow extruded articles of Claim 25, further comprising the step of continuously repeating the process steps to form a continuous chain of extruded articles.

27. The process for manufacturing variable diameter hollow extruded articles of Claim 25 or Claim 26, wherein the step of controlling the diameter of the leading edge of the extrusion forms the discharge section of a first liner.

28. The process for manufacturing variable diameter hollow extruded articles of Claim 27, wherein the step of controlling the diameter of the extrusion after forming the body section of the first liner sets the diameter of the extrusion to form the fill section of the first liner and the discharge section of the second liner to be formed.

29. The process for manufacturing variable diameter hollow extruded articles of Claim 25, wherein the step of controlling the diameter of the leading edge of the extrusion forms the first tubular spout section of a balloon.

30. The process for manufacturing variable diameter hollow extruded articles of Claim 29, wherein the step of controlling the diameter of the extrusion after forming the body section of the first balloon sets the diameter of the extrusion to form the second tubular spout section of the first balloon and the first tubular spout section of the second balloon to be formed.

31. The process for manufacturing variable diameter hollow extruded articles of Claim 25, wherein the step of controlling the diameter of the leading edge of the extrusion forms the first tubular spout section of a first pair of condoms extruded as one long extrusion having a cylindrically shaped body.

32. The process for manufacturing variable diameter hollow extruded articles of Claim 31, wherein the step of controlling the diameter of the extrusion after forming the body section of the first pair of condoms sets the diameter of the extrusion to form the second tubular spout section of the first pair of condoms and the first tubular spout section of a second pair of condoms to be formed.

33. The process for manufacturing variable diameter hollow extruded articles of Claim 32, further comprising the step of placing transverse seals in the first and second tubular spout sections of each pair of extruded condoms.

34. The process for manufacturing variable diameter hollow extruded articles of Claim 33, further comprising the step of separating the pairs of condoms by making a first transverse cut in the body section midway between the first and second tubular spout sections of the extrusion and a second transverse cut in the spout sections between the transverse seals.

35. The process for manufacturing variable diameter hollow extruded articles of Claim 25, further comprising the step of varying the distance between the pinch rolls and the extruder to maintain a constant volume of fluid between the extruder and the pinch rolls as the body section of the extruded article passes between the pinch rolls.

36. The process for manufacturing variable diameter hollow extruded articles of Claim 25, wherein the step of controlling the diameter of a predetermined length of the extrusion comprises the step of inserting vacuum means into the interior area of the extrusion to create a vacuum to control the diameter of the extrusion.

37. The process for manufacturing variable diameter hollow extruded articles of Claim 25, wherein the step of controlling the diameter of a predetermined length of the extrusion comprises the steps of:

injecting a predetermined volume of fluid into the interior area of the leading edge of the extrusion to control the diameter of a predetermined length of the extrusion to form a first tubular spout section;

increasing the volume of fluid injected into the interior area of that portion of the extrusion following the first spout section; and

reducing the volume of fluid injected into the interior area of the extrusion to control the diameter of a predetermined length of the extrusion to form a second spout section.

38. The process for manufacturing variable diameter hollow extruded articles of Claim 37, further comprising the step of computer controlling the varying of the diameter of the die.

Fig.1
(PRIOR ART)

Fig.2
(PRIOR ART)

Fig.3
(PRIOR ART)

Fig.4
(PRIOR ART)

Fig.5

Fig.6

Fig.7

Fig.8

Fig.9

Fig.10

Fig.11

Fig.12

Fig.13

**Fig.14**

**Fig.15**

**Fig.16**

17

230

84'

86'

232

Fig.17

234

230

88'
240

86'
238

232

236

86'

236

Fig.18

234

244

242

246

246

246

244

Fig.19

Fig.20

Fig.21

Fig.22

Fig.24

Fig.23

Fig.25

Fig.26

Fig.27

Fig.28

Fig.29

# Fig.30

# Fig.31

178'

354

350

352

358

354

356

356

350

358

358

352

Fig.32

354

364

362

350

Fig.33

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 356 957 (JOSEF NITTEL GMBH &CO. KG) | 1-4,9,10 | B65D88/16 |
| A | * column 1, line 21 - line 31 * | 6,10, | B29C47/00 |
| | | 11-13, | |
| | | 20-23, | |
| | | 37,38 | |
| | * column 1, line 53 - column 2, line 1 * | | |
| | * column 2, line 16 - line 30 * | | |
| | * column 3, line 1 - line 13 * | | |
| | * column 5, line 40 - line 51; claim 4; figures * | | |
| | --- | | |
| X | US-A-4 189 288 (HARTMUT HALTER) | 1,3,9, | |
| | | 10,14 | |
| A | * the whole document * | 29,38 | |
| | --- | | |
| A | EP-A-0 105 238 (CUSTOM PACKAGING SYSTEMS, INC.) | 1-13,27 | |
| | * page 16, line 7 - line 22; figures * | | |
| | --- | | |
| A | EP-A-0 116 821 (AERO TEC LABORATORIES,INC.) | 6,7 | |
| | * abstract; figures * | | |
| | | | **TECHNICAL FIELDS SEARCHED (Int. Cl.5)** |
| | ----- | | B65D |
| | | | B29C |

The present search report has been drawn up for all claims

| Place of search | Date of completion of the search | Examiner |
|---|---|---|
| THE HAGUE | 06 FEBRUARY 1992 | VAN ROLLEGHEM F. |